Europäisches Patentamt

European Patent Office

Office européen des brevets

(11) Publication number: 0 481 594 A1

## EUROPEAN PATENT APPLICATION

(21) Application number: 91307677.4

(22) Date of filing: 21.08.91

(51) Int. Cl.5: G01C 19/58, G01P 3/46

(30) Priority: 19.10.90 JP 279355/90

(43) Date of publication of application:
22.04.92 Bulletin 92/17

(84) Designated Contracting States:
CH DE FR GB IT LI

(71) Applicant: TAMAGAWA SEIKI KABUSHIKI
KAISHA
19-9 Shin Kamata 3-Chome
Ota-ku Tokyo(JP)

(72) Inventor: Kumagai, Hideo, c/o Tamagawa
Seiki K. K.
Iida Kogyo, 1879, Ooyasumi
Iida-shi, Nagano-ken(JP)
Inventor: Shiozawa, Tatsuo, Tamagawa Seiki
K. K.
Iida Kogyo, 1879, Ooyasumi
Iida-shi, Nagano-ken(JP)

(74) Representative: White, Martin David et al
MARKS & CLERK 57/60 Lincoln's Inn Fields
London WC2A 3LS(GB)

(54) Gyro apparatus employing a semiconductor device.

(57) A semiconductor gyro apparatus includes a current supply device (23) for supplying electrical current to a semiconductor device (20) consitituted by a solid-state device, and a voltage detection (26) connected to the semiconductor device (20). The coriolis force exerted on the flow of electrons within the semiconductor device when an angular velocity is imposed on the semiconductor device is detected by the voltage detection device (26) as an electrical voltage.

FIG. 4

BACKGROUND OF THE INVENTION

Field of the Invention

This invention relates to a gyro apparatus. More particularly, it relates to a semiconductor gyro apparatus in which the coriolis force acting on the flow of electrons within a semiconductor device as a solid-state device is detected as an electrical voltage.

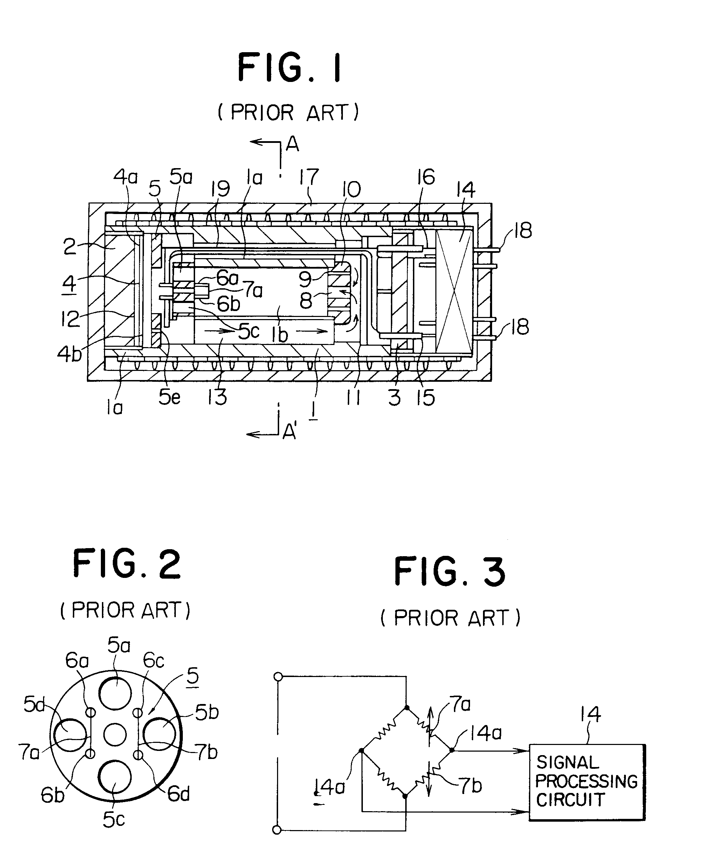

The conventional angular velocity detection means may be exemplified by a gas rate sensor disclosed in the JP Patent Kokai Publication No. 167671/1989, shown herein in Fig. 1 to 3.

In these figures, a casing 1 is generally a cylinder open at both ends which are stopped up by a pump holder 2 and a relay terminal plate 3, so that the inside of the casing 1 is isolated from the outside.

A vibratable plate 4a, formed by a ceramic disc of an electrostriction type material, is mounted on the pump holder 2 and has its rim secured to the pump holder 2 to provide an electrostriction vibration pump 4 (gas pump).

An electrode holder 5, shown in Fig. 2 is mounted within the casing 1 at a predetermined distance from the vibratable plate 4a.

Referring to Fig. 2, the electrode holder 5 has four gas guide openings 5a to 5d and four electrodes 6a to 6d which are arranged symmetrically with respect to the central axis. Hot wires 7a, 7b are melt-fused between the electrodes 6a and 6b and between the electrodes 6c and 6d, respectively.

A nozzle plate 10 having a nozzle opening 8 and an auxiliary opening 9 is provided in the vicinity of the terminal plate 3 within the casing 1, and a dust plate 11 is provided at a middle position between the terminal plate 3 and the nozzle plate 10.

A pump chamber 12 is defined between the vibratable plate 4a of the vibration pump 4 and the pump holder 2. The gas delivered by the pump 4 is supplied to a gas duct 13 by means of the gas guide openings 5a to 5d.

A signal processing circuit 14, formed as an IC device, is provided outwardly of the relay terminal plate 3 within the casing 1. The circuit 14 is connected to a relay terminal 15 of the relay terminal plate 3 adapted for receiving the power from outside and taking out the output of the hot wires 7a and 7b.

A lead pin 16 is provided on the relay terminal plate 3 and is connected to an external terminal 18 provided on an outer casing 17.

The external terminal 18 is adapted for supplying the power necessary to actuate the vibratable pump 4 and the power necessary to heat the hot wires 7a, 7b by means of the signal processing circuit 14, the lead pin 16 and a plurality of lead wires 19 provided along the axis of the casing 1.

The output terminal 18 also functions to issue output signals from the hot wires 7a and 7b by way of the signal processing circuit 14.

The above described conventional gas rate sensor operates in the following manner.

When an electrical current is supplied to the vibratable pump or gas pump 4, the vibratable plate 4a is excited into vibrations for compressing the gas in the pump chamber 12. The compressed gas flows into the gas duct 13 by way of a discharge port 4b in the vibratable plate 4a and a discharge port 5e in the electrode holder 5, and thence into a space defined between the nozzle plate 10 and the dust plate 11 so as to be ejected through a space 1b within a hollow cylindrical section 1a within the casing 1 towards the electrodes 6a to 6d.

After uniformly cooling the hot wires 7a and 7b welded to the electrodes 6a to 6d, the compressed gas is discharged by way of the gas guide opening 5a to 5d towards the vibratable plate 4a, and returned to the nozzle plate 10 by way of gas duct 13 under the action of the vibratable pump 4 so as to be circulated within the casing 1 as indicated by arrows in Fig. 1.

The hot wires 7a and 7b are cooled uniformly unless an angular velocity is imposed on the casing 1. If an angular velocity is imposed on the casing 1 from outside, the gas flow in the casing 1 is offset and nonuniform heating states are induced in the hot wires 7a and 7b. Thus a small potential difference is induced between the hot wires 7a and 7b. The angular velocity applied to the casing 1 may be sensed by measuring this potential difference.

The above described conventional gas rate sensor has the following disadvantages.

Since temperature sensitive elements in the form of a pair of heated hot wires are used as the angular velocity detection means, it takes some considerable time from the start of supply of the electrical current until stable output signals start to be issued from the hot wires. Thus the sensor is not ready to be used for some time after the start of supply of the electrical current.

The sensor is bulky in size and complicated in structure. Thus the sensor is costly and, due to its construction, cannot be reduced in size.

EP 0 481 594 A1

Since the gas is circulated by the gas pump through the interior of the sensor, the operation of the sensor ceases if the gas pump ceases to function.

Object and Summary of the Invention

It is therefore a principal object of the present invention to provide a gyro apparatus which is cheap to manufacture, which has a simple structure, and which can be made to be small in size. It is also an object of the invention to provide an apparatus which is reliable and which be used almost immediately after it is switched on.

The invention provides a semiconductor gyro apparatus as claimed in claim 1.

According to the present invention, there is provided a semiconductor gyro apparatus comprising current supply means for supplying an electrical current to a semiconductor device formed by a solid state device and voltage detection means connected to the semiconductor device.

The semiconductor device may be formed by a Hall device.

With the semiconductor gyro apparatus of the present invention, a coriolis force acting on the flow of electrons within the inside of the semiconductor device is generated when an angular velocity is applied to the semiconductor device. As a result, a force $F = -2m\psi \times \omega$, wherein $\psi$, $\omega$ and $m$ denote the velocity of the electrons, the angular velocity and the mass of the electrons respectively, is produced, and a voltage is detected by the voltage detection means.

With the semiconductor gyro apparatus of the present invention, the following advantages are derived.

Since the angular velocity sensor is a semiconductor device, such as a Hall device, the construction of the gyro apparatus is drastically simplified as compared to the conventional system which makes use of a gas, and mechanical components. In addition, the overall size of the gyro apparatus may be reduced significantly.

Brief Description of the Drawings

Figs. 1 to 3 illustrate a conventional gas rate sensor, wherein Fig. 1 is a cross-sectional view of the sensor, Fig. 2 is a plan view of an electrode holder looking along arrows A-A is Fig. 1 and Fig. 3 is a block diagram of the sensor.

Fig. 4 and 5 illustrate a semiconductor gyro apparatus according to the present invention, wherein Fig. 4 is a schematic illustrating the operating principle and Fig. 5 is a schematic illustrating the basic structure of the Hall device.

Description of Preferred Embodiment

With reference to the drawings, a preferred embodiment of the semiconductor gyro apparatus according to the present invention is described in detail, by way of example.

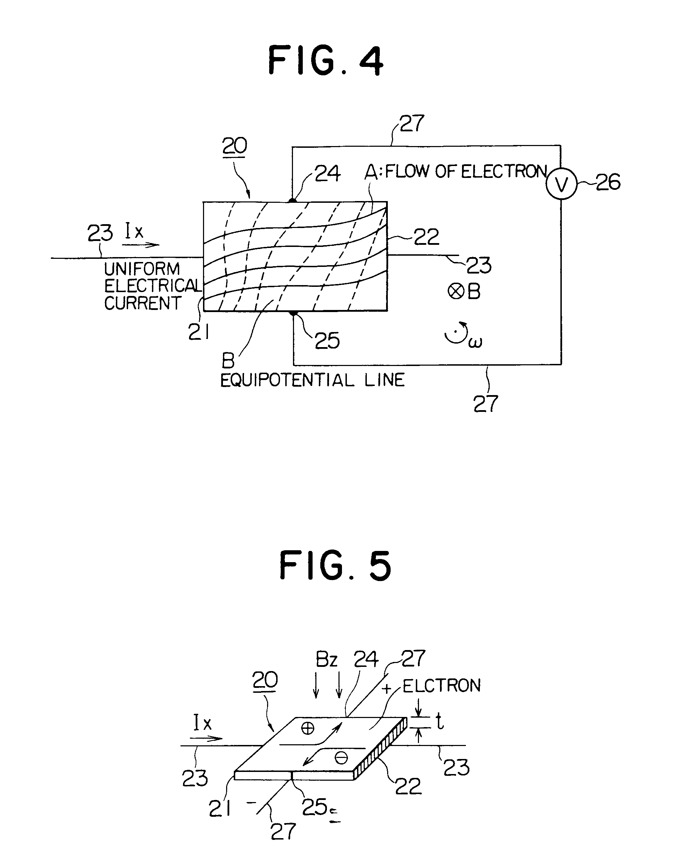

Fig. 4 is a schematic showing a gyro apparatus according to the present invention.

In figure 4, a semiconductor device or a Hall device is indicated by numeral 20. A current supply unit 23 is connected across a first electrode 21 and a second electrode 22 of the semiconductor device 20 for supplying a predetermined current I to the semiconductor device 20.

A voltage sensor 26 is connected across a third electrode 24 and a fourth electrode 25 of the semiconductor device 20 by means of a lead wire 27.

The Hall element constituting the semiconductor device 20 is arranged as shown in Fig. 5. In this figure, parts or components similar to those shown in Fig. 4 are indicated by the same numerals.

In general, when the current Ix is caused to flow in the semiconductor device 20 by the current supply unit 23, and a magnetic field is applied in a direction perpendicular to the direction of the electrical field, the trajectory of carriers in motion is bent by the electromagnetic force, and an electromotive force is generated in a direction perpendicular to both the electrical field and the magnetic field.

The electromagnetic force exerted on the carriers is known as the Lorenz force, while the effect is known as the Hall effect.

Assuming that, in Fig. 5, the current Ix(A) is caused to flow between the first and second electrodes 21 and 22 of the semiconductor device 20 which is t cm thick, and a magnetic field Bz(Gauss) is applied in a direction normal thereto, an electromotive force is generated between the third electrode 24 and the fourth electrode 25.

The reason therefor is that the above mentioned Lorenz force acts on the carriers flowing between the first and second electrodes 21, 22 under the magnetic field Bz in a direction which will cause the flow of

3

carriers to be deviated sideways.

The electromotive force generated in this manner between the third and the fourth electrodes 24 and 25 is termed the Hall voltage $V_H$ and is given by the formula (1)

$$V_H \ = \ R_H \ \frac{I \ \times \ Bz}{t} \qquad \text{(using S.I. units)} \qquad (1)$$

In the formula (1), the proportionality constant $R_H$ istermed the Hall coefficient. If the semiconductor device is N-type, the Hall coefficient $R_H$ is given by the formula (2)

$$R_H \ = \ -\frac{1}{ng} \qquad (2)$$

In formula (2) the carrier concentration is $n(cm^{-3})$ and the carrier charge is g (Coulomb). If the device is P-type, the sign of the right hand side of the formula (2) becomes positive ( + ).

Therefore, if a magnetic field $Bz = 1000$ Gauss and a current $Ix = 1$ mA are applied to a rectangular N-type germanium device ($n = 10^{14}$ $cm^{-3}$ ) having a thickness $t = 1mm$, a width of 1cm and a resistance of approximately 20 ohm - cm, the Hall voltage $V_H$ is approximately 2 mV which can be detected fairly easily by a usual detection device.

The sensitivity of the Hall device as the semiconductor device 20, that is the Hall voltage, may be increased by increasing the value of $R_H/t$. Since the Hall coefficient $R_H$ is inversely proportional to the carrier concentration n, a lower value of the carrier concentration of the semiconductor material is preferred.

The following Table 1 shows the constants of typical semiconductor materials employed in the Hall device.

| | Carrier Concentration [m$^{-3}$] | Hall Coefficient [m$^3$/coul] | Resistivity at (25 ° C) [$\Omega$-m] | Sensitivity [$\Omega$-m$^2$/Wb] |
|---|---|---|---|---|
| N type S | $3.5 \times 10^{17}$ | $1.6 \times 10^1$ | $1.2 \times 10^3$ | $8 \times 10^4$ |
| N type Ge | $8.5 \times 10^{20}$ | $7.4 \times 10^{-3}$ | $1.9 \times 10^{-2}$ | $3.7 \times 10^1$ |
| N type InAs | $2.6 \times 10^{22}$ | $2.8 \times 10^{-4}$ | $8 \times 10^{-5}$ | $1.4$ |
| N type InSb | $3.0 \times 10^{23}$ | $2.2 \times 10^{-5}$ | $3 \times 10^{-6}$ | $1.1 \times 10^{-1}$ |

The operation of detecting the angular velocity using a Hall device as the semiconductor device 20 is hereinafter explained.

Assuming that, in Fig. 4, a uniform electrical current Ix is applied between the first and second electrodes 21, 22, the flow of electrons A and the equipotential line B are produced, as indicated by solid lives and broken lines, respectively. If an external magnetic field Bz is applied, the Hall effect or Lorentz force F is produced, as indicated by the formula (3)

$$F \ = \ Q\psi \times B \qquad (3)$$

This force produces the Hall voltage across the sample. In formula (3), $\psi$ and Q denote the velocity of the electrons and the quantity of electrical charges, respectively.

If an angular velocity is imposed and hence the coriolis force is applied to the flow of electrons, the coriolis force F is produced in accordance with the formula (4)

$$F \ = \ -2m\psi \times \omega \qquad (4)$$

In formula 4, $\psi$, $\omega$ and m denote the velocity of the electrons, the angular velocity and the mass of the electrons, respectively. Thus, when the angular velocity is imposed, the force represented by formula 4 gives rise to a voltage across the sample.

Although a 3mm $\times$ 3mm Hall device is employed in the present illustrative embodiment, a number of the Hall devices may also be stocked in multi-stage and the output voltages of the individual Hall devices summed together, so that a higher sensitivity of the gyro apparatus may be achieved.

Besides a Hall device, a p-type semiconductor device or an LSI device may also be employed as the semiconductor device.

**Claims**

1. A semiconductor gyro apparatus comprising:-current supply means (23) for supplying an electrical current to a semiconductor device (20) comprising a solid-state device; and voltage detection means (26) connected to said semiconductor device (20), said semiconductor gyro apparatus being characterised in that the Coriolis force exerted on the flow of electrons within said semiconductor device (20) on application of an angular velocity to said semiconductor device (20) is detected by said voltage detection means (26).

2. A semiconductor gyro apparatus according to claim 1 Characterised in that said semiconductor device (20) is a Hall device.

3. A semiconductor gyro apparatus according to claim 1 wherein said semiconductor device (20) comprises a plurality of solid-state devices.

4. A semiconductor gyro apparatus according to claim 3, wherein at least one of said plurality of solid-state devices is a Hall device.

EP 0 481 594 A1

# FIG. 1

(PRIOR ART)

# FIG. 2

(PRIOR ART)

# FIG. 3

(PRIOR ART)

SIGNAL PROCESSING CIRCUIT

6

# FIG. 4

# FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 341 801   (MESSERSCHMITT-BÖLKOW-BLOHM) <br> * claims; figures 1,2 * * <br> – – – – – | 1-4 | G 01 C 19/58 <br> G 01 P 3/46 |

TECHNICAL FIELDS
SEARCHED (Int. Cl.5)

G 01 C
G 01 P

The present search report has been drawn up for all claims

| Place of search | Date of completion of search | Examiner |
|---|---|---|
| The Hague | 28 January 92 | HOEKSTRA F.R. |

CATEGORY OF CITED DOCUMENTS

X : particularly relevant if taken alone
Y : particularly relevant if combined with another
     document of the same catagory
A : technological background
O : non-written disclosure
P : intermediate document
T : theory or principle underlying the invention

E : earlier patent document, but published on, or after
     the filing date
D : document cited in the application
L : document cited for other reasons
 

& : member of the same patent family, corresponding
     document